# EUROPÄISCHE PATENTSCHRIFT

(11) **EP 1 714 769 B1**
(45) Veröffentlichungstag und Bekanntmachung des Hinweises auf die Patenterteilung: **13.03.2013**
(21) Anmeldenummer: 06007676.7
(22) Anmeldetag: 12.04.2006
(51) Int. Cl.: B29C 45/28

(54) **Vorrichtung zum Öffnen und Schliessen von Einspritzdüsen in einem Spritzgusswerkzeug**
Device for opening and closing an injection nozzle in an injection mold
Dispositif pour l'ouverture et la fermeture de buses d'injection dans un moule d'injection

(30) Priorität: 22.04.2005 DE 102005018982
(43) Veröffentlichungstag der Anmeldung: 25.10.2006
(73) Patentinhaber: Schreck, Hans, 35099 Burgwald-Bottendorf (DE)
(72) Erfinder: Schunke, Erwin, 35066 Frankenberg (DE)
(74) Vertreter: Böck, Bernhard

(56) Entgegenhaltungen:
- EP-A- 1 025 974
- US-A- 5 078 589
- US-A- 5 556 582
- US-A1- 2004 256 767
- PATENT ABSTRACTS OF JAPAN Bd. 010, Nr. 286 (M-521), 27. September 1986 (1986-09-27) & JP 61 104818 A (TOYOTA MOTOR CORP), 23. Mai 1986 (1986-05-23)
- PATENT ABSTRACTS OF JAPAN Bd. 006, Nr. 117 (M-139), 30. Juni 1982 (1982-06-30) & JP 57 045041 A (SEIKOU GIKEN:KK), 13. März 1982 (1982-03-13)

## Beschreibung

Die vorliegende Erfindung betrifft eine Vorrichtung zum Öffnen und Schließen von Einspritzdüsen in einem Spritzgusswerkzeug mit den Merkmalen des Oberbegriffes des Patentanspruchs 1.

Vorrichtungen der eingangs genannten Art finden beispielsweise, jedoch keineswegs ausschließlich in der sogenannten Heißkanaltechnik Verwendung, bei der die zu verarbeitende Formmasse über beheizte Kanäle, Ventile und Düsen getaktet in einen Formhohlraum gespritzt wird. Über das Stellgetriebe werden die zur Ausbildung von Einspritzdüsen in beheizten Kanälen geführten Düsennadeln abdichtend gegen eine Düsenspitze gedrückt oder zur Freigabe einer Düsenöffnung von dieser abgehoben. Hierzu ist es bekannt, ein aus einem hydraulischen Kolbentrieb gebildetes Stellgetriebe zu verwenden, wobei ein doppelt wirkender Kolben mit dem Schafft der Düsennadel gekoppelt wird und wechselseitig mit einem Arbeitsfluid beaufschlagt wird. Derart fluidbetriebene Stellgetriebe sind aufgrund ihrer Integration in das Spritzgusswerkzeug einer Temperaturbelastung unterworfen, die im Wesentlichen der Temperatur des Spritzgusswerkzeuges entspricht. Hieraus ergeben sich besondere Anforderungen, insbesondere an die für den Kolbentrieb verwendeten Dichtungsmaterialien.

Aus der US 2004/0256767 A1 ist eine Vorrichtung zum Öffnen und Schließen von Einspritzdüsen mit einstellbaren Düsennadeln bekannt. Eine Abtriebsschubstange ist dabei als Kolben ausgebildet, wobei in den Kolben Muttern mit gegenläufigen Gewinden eingeschraubt sind. Eine in den Kolben eingesetzte Düsennadel kommt an einer der Muttern zur Anlage, so dass durch eine Verstellung und Fixierung der Muttern im Kolben eine Längeneinsteilung der Düsennadel relativ zu einer Düsendichtung erfolgen kahn.

Eine Steuer- bzw. Anzeigeeinheit für eine Vorrichtung zum Öffnen und Schließen von Einspritzdüsen ist aus der US 5,556,582 A bekannt. Im Bereich einer Formkavität sind Messwertgeber zur Messung eines Forminnendrucks, und in einem Stellgetriebe sind Messwertgeber zur Positionierungsfcststellung von Düsennadeln angeordnet.

Die JP 57045041 A und die JP 61104818 A offenbaren jeweils Vorrichtungen zum Öffnen und Schließen von Einspritzdüsen mit einer Antriebsschubstange, welche eine schiefe Ebene bzw. eine Führungsnut aufweist, die mit einem an einer Düsennadel angeordneten Führungsstift in Eingriff steht, derart, dass bei einer Bewegung der Antriebsschubstange die Düsennadel bewegbar ist.

Insbesondere aus der EP 1 025 974 A2 ist eine Vorrichtung bekannt, die zur Simultanpositionierung von Düsennadeln, welche zwischen einer vorderen Platte und einer hinteren Platte formschlüssig aufgenommen sind, dient. Die Düsennadeln sind vermittels Abtriebsschubstangen, welche mit der Platte verschraubt sind, und an Antriebssehubstangen, welche von einer Antriebseinheit bewegbar sind, entlang ihrer Längsachse positionierbar. Die Schubstangen sind mit schrägen Nuten und Nutensteinen versehen und bilden so zusammen eine Gleitflächenpaarung in Art einer Nutenführung.

Die Erfindung wird durch eine Vorrichtung mit den Merkmalen des Anspruchs 1 definiert.

Bei der erfindungsgemäßen Vorrichtung ist die Antriebseinheit außerhalb des Spritzgusswerkzeuges angeordnet und das Stellgetriebe ist als Schubstangengetriebe mit einer ersten Antriebsschubstange zur kraftschlüssigen Verbindung mit der Antriebseinheit und zumindest einer weiteren Abtriebsschubstange zur kraftschlüssigen Verbindung mit der Düsennadelanordnung ausgebildet.

Die Ausbildung des Stellgetriebes als Schubstangenanordnung gewährleistet, dass bei den üblicherweise am Spritzgusswerkzeug vorliegenden Temperaturen keine Beeinträchtigung der Funktion des Stellgetriebes oder des Antriebsmechanismus zu befürchten ist.

Durch die Kombination der Schubstangenanordnung mit einer außerhalb und seitlich am Spritzgusswerkzeug angeordneten Antriebseinheit ist die freie Zugänglichkeit der regelmäßig als Anschlussseite zum Anschluss der Spritzgutzuführung verwendeten Oberseite des Spritzgusswerkzeuges ohne jede Einschränkung möglich.

Betreffend den vorstehend verwendeten Begriff der "Schubstange" ist festzuhalten, dass dieser Begriff lediglich in seiner kinematischen Bedeutung zu verstehen ist und keine Beschränkung hinsichtlich der Dimensionen des als "Schubstange" beschriebenen Gegenstands umfassen soll. Unter dem Begriff "Schubstange" ist demnach gleichermaßen ein Element mit vorherrschender Längserstreckung wie ein in seiner Bauform sehr gedrungen ausgebildetes Element zu verstehen.

Erfindungsgemäß sind die Schubstangen als Zahnstangen ausgebildet, da bei einer Relativbewegung der Zahnstangen mit Eingriffsausbildung zur Gleitflächenpaarung immer neue Zahnpaarungen in Eingriff miteinander gelangen und so einerseits die Ausbildung von "Schubstangen" extremer Längserstreckung als auch die Kombination einer "Schubstange" extremer Längserstreckung mit einer extrem gedrungenen Schubstange möglich ist.

Erfindungsgemäß sind die Schubstangen in einer Führungskörperanordnung mit zur Gleitführung der Schubstangen ausgebildeten Führungsaufnahmen angeordnet, wobei eine sowohl besonders einfache Ausbildung als auch eine besonders einfache Kombination des Stellgetriebes mit dem Spritzgusswerkzeug durch Integration oder Anbau möglich ist.

Als besonders vorteilhaft erweist es sich, wenn die Führungskörperanordnung in einer modularen Gehäuseeinheit zur Verbindung mit dem Spritzgusswerkzeug ausgebildet ist, da hierdurch eine besonders einfache Kombination des Stellgetriebes mit einem standardmäßig ausgebildeten Spritzgusswerkzeug möglich ist.

Dies kann beispielsweise derart erfolgen, dass die Führungskörperanordnung unter zwischenliegender Anordnung eines Hcißkanalverteilers mit dem Spritzgusswerkzeug verbunden ist.

Alternativ ist es auch möglich, die Führungsanordnung als Teil eines Heißkanalverteilers auszubilden, also etwa in einen Heißkanalverteiler zu integrieren.

Erfindungsgemäß ist die Düsennadelanordnung vermittels einer Positionicrcinrichtung mit der Abtriebsschubstange verbunden. Im Betrieb des Stellgetriebes kann dann gegen fest definierte Endanschläge zu verfahren und eine Feineinstellung der Düscnnadclanordnung über die Positioniereinrichtung vorgenommen werden.

Erfindungsgemäß weist die Führungskorperanordnung zumindest ein Führungsstück auf, das sowohl zur Aufnahme der Antricbsschubstange als auch zur Aufnahme der Abtriebsschubstange dient. Eine sowohl hinsichtlich der Teileanzahl minimierte als auch hinsichtlich der Frührungsgenauigkeit optimierte Führungskörperanordnung wird so möglich.

Eine besonders kompakte Ausgestaltung der Vorrichtung wird möglich, wenn die Führungskörperanordnung in koaxialer Ausrichtung mit der Antriebsschubstange mit der Antriebseinheit versehen ist.

Nach einer weiteren bevorzugten Ausgestaltung der Erfindung weist die Vorrichtung Mittel zur Anzeige der Stellung der ersten Antricbsschubstange, der weiteren Antriebsschubstangc und/oder der Düsennadelanordnung auf. Damit kann direkt oder indirekt die Stellung des jeweiligen Elementes, insbesondere auch die Offen- oder Schließstellung der Düsennadelanordnung, ermittelt bzw. angezeigt werden, wobei zudem für einen Benutzer sofort ersichtlich ist, ob sich die Antriebsschubstangen und/oder die Düsennadelanordnung überhaupt bewegen und damit funktionsfähig sind.

Gemäß einer besonders bevorzugten Ausgestaltung weisen die Mittel einen Zeiger auf, der im Bereich seines ersten Endes mit der ersten Antriebsschubstange, der weiteren Antriebsschubstange und/oder der Düsennadelanordnung im wesentlichen starr verbunden ist und mit seinem zweiten Ende mit einer Skala zusammenwirkt, die im Bereich der Außenwand der Vorrichtung vorgesehen oder im Inneren der Vorrichtung derart angeordnet ist, dass sie durch eine Ausnehmung in der Außenwand der Vorrichtung ablesbar ist.

In dazu alternativer Ausgestaltung können die Mittel einen Messwertgeber, beispielsweise einen inkrementalen Mcsswertgeber, aufweisen, desscn Signal zur Ansteuerung einer elektrischen oder elektronischen Anzeigevorrichtung, beispielsweise eines LCD-Displays oder einer LED-Anordnung, dient, wobei zwischen Messwertgeber und Anzeigevorrichtung eine Auswerteeinheit, beispielsweise ein Mikroprozessor, zwischengeschaltet sein kann.

Nachfolgend werden bevorzugte Ausführungsbeispiele der Vorrichtung anhand der Zeichnung näher erläutert.

Es zeigen:
- **Fig. 1**: eine Teildarstellung eines Spritzgusswerkzeuges in Schnittdarstellung;
- **Fig. 2**: das in **Fig. 1** dargestellte Spritzgusswerkzeug in Draufsicht;
- **Fig. 3**: das in **Fig. 1** dargestellte Spritzgusswerkzeug in Schnittdarstellung längs Schnittlinienverlauf III - III in **Fig. 1** mit rechtwinklig zueinander verlaufenden Schubstangenachsen;
- **Fig. 4**: ein Stellgetriebe, dessen Schubstangenachsen unter einem Winkel a kleiner 90° zueinander verlaufen;
- **Fig. 5**: ein Stellgetriebe mit zweifacher 90°-Abwinklung zwischen einer ersten Antriebsstange, einer ersten Abtriebsstange und einer zweiten Abtriebsstange;
- **Fig. 6**: eine Ausführungsform der Vorrichtung mit einer in einen Heißkanalverteiler integrierten Anordnung einer Führungskörperanordnung des Stellgetriebes;
- **Fig. 7**: eine Draufsicht der in **Fig. 6** dargestellten Vorrichtung;
- **Fig. 8**: eine Schnittdarstellung der in **Fig. 6** dargestellten Vorrichtung gemäß Schnittlinienverlauf VIII - VIII in **Fig. 6****.**
- **Fig. 9**: eine weitere Ausführungsform der Vorrichtung mit einer in einen Heißkanalverteiler integrierten Anordnung einer Führuugskörperanordnung des Stellgetriebes mit Mitteln zur Anzeige der Stellung der Antriebsschubstange;
- **Fig. 10**: eine schematische Schnittdarstellung der in **Fig. 9** dargestellten Vorrichtung gemäß Schnittlinienverlauf X - X in **Fig. 9****;**
- **Fig. 11**: eine Draufsicht der in **Fig. 9** dargestellten Vorrichtung; und
- **Fig. 12**: die Einzelheit E nach **Fig. 10** in vergrößerter Darstellung.

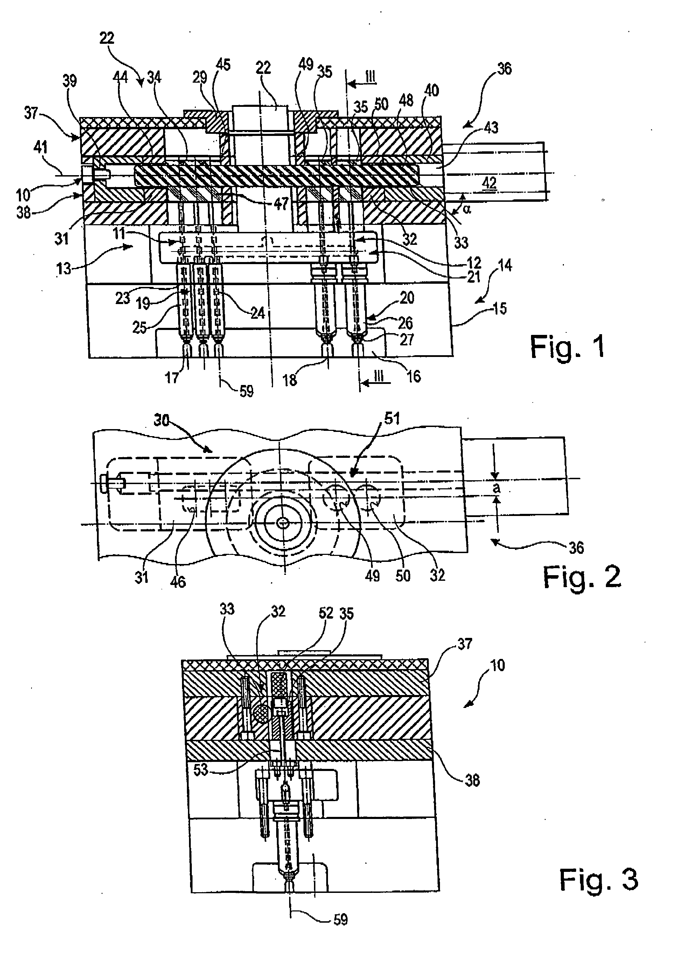

Fig. **1** zeigt eine Antriebsvorrichtung 10 zum Antrieb einer im Falle des vorliegenden Ausführungsbeispiels zwei Düsennadelgruppen 11, 12 umfassenden Düsennadelanordnung 13. Die Antriebsvorrichtung 10 ist an einem Spritzgusswerkzeug 14 ausgebildet, das ein in einer Formwerkzeugaufnahme 15 aufgenommenes Formwerkzeug 16 aufweist. In dem Formwerkzeug 16 sind im vorliegenden Fall fünf Formnester 17 und 18 ausgebildet, die über zugeordnete Heißkanaldüsen 19 und 20 und einen daran angeschlossenen Heißkanalverteiler 21, der über eine Spritzgutzuführung 22 mit Spritzgut versorgt wird, mit einer hier nicht näher dargestellten Spritzgutquelle verbunden sind.

Wie aus einer Zusammenschau der **Fig. 1, 2** und **3** deutlich wird, umfasst die Antriebsvorrichtung 10 eine Führungskörperanordnung 30 mit zwei Führungsstücken 31, 32, die zusammen mit einer Antriebsschubstange 33 und drei Abtriebsschubstangen 34, 35 in einem insgesamt plattenförmig ausgebildeten Antriebsmodul 36 angeordnet sind. In dem Antriebsmodul 36 sind zwischen zwei Deckplatten 37 und 38 in einer Antriebsmodulplatte 40 die Führungsstücke 31, 32 sowie ein Aufnahmestücke 39 aufgenommen, das zur Ermöglichung eines translatorischcn Verfahrweges der Antriebsschubstange 33 in Richtung einer Antriebsachse 41 ein axiales Ende der Antriebsschubstange 33 aufnimmt. Gegenüberliegend dem in **Fig. 2** rechten axialen Ende der Antriebsschubstange 33 ist außen am Spritzgusswerkzeug 14 ein translatorischer Aktuator 42 angeordnet, der beispielsweise als elektrisch, pneumatisch oder hydraulisch betätigbarer Motor, insbesondere als Schrittmotor, ausgebildet sein kann. Über eine Kupplung 43 ist der Aktuator 42 kraftschlüssig mit der Antriebsschubstange 33 verbunden, derart, dass die im vorliegenden Fall einen kreisrunden Querschnitt **(****Fig. 3****)** aufweisende Antriebsschubstange 33 längs der Antriebsachse 41 in beide Richtungen verfahrbar ist.

Die Antriebsschubstange 33 ist mit ihrem in **Fig. 1** linken Teil in zwei Führungsbohrungen 44, 45 des Führungsstücks 31 gelagert, derart, dass eine mit einem Achsversatz **a (****Fig. 2****)** in einer Führungsaufnahme 46, hier annährend quaderförmig ausgebildete Abtriebsschubstange 34, sich mit ihrer Schrägverzahnung 47 im Eingriff mit einer entsprechenden Schrägverzahnung 48 der Antriebsschubstange 33 befindet. Der in **Fig**. **1** rechte Teil der Antriebsschubstange 33 ist in zwei Führungsbohrungen 49, 50 des Führungsstücks 32 gleitgelagert, zwischen denen mit Achsversatz a in zwei Führungsaufnahmen 51 (**Fig**. **2****)** jeweils eine Abtriebsschubstange 35 zur Führung aufgenommen ist. Die Abtriebsschubstangen 35 sind ebenfalls mit einer Schrägverzahnung 47 versehen, die sich im Eingriff mit der Schrägverzahnung 48 der Antriebsschubstange 33 befindet.

Aufgrund des Zahneingriffs zwischen der Antriebsschubstange 33, der Abtriebsschubstangc 34 und den Abtriebsschubstangen 35 sowie dem im vorliegenden Fall gewählten Schrägungswinkel α=45° der Gleitflächenpaarungen bildenden Schrägverzahnungen 47, 48 bewirkt eine translatorische Verschiebung der Antriebsschubstange 33 durch den Aktuator 42 eine entsprechende translatorische Verschiebung der Abtriebsschubstangen 34, 35 in den Führungsaufnahmen 46 und 51. In dem in **Fig. 1** dargestellten Ausführungsbeispiel hat eine Translationsbewegung der Antriebsschubstange 33 nach links eine Translationsbewegung der Abtriebsschubstangen 34, 35 gleicher Größe längs einer Abtriebsachse 59 nach unten zur Folge.

Wie **Fig. 3** am Beispiel einer Abtriebsschubstange 35 zeigt, ist in den Abtriebsschubstangen 34, 35 jeweils eine, im vorliegenden Fall als Mikrometerschraube ausgebildete Positioniereinrichtung 52 angeordnet, die zur Aufnahme jeweils einer Düsennadel 53 dient. Vermittels der Positioniereinrichtung 52 kann die axiale Position der Düsennadel 53 gegenüber der Abtriebsschubstange 34 bzw. 35 reproduzierbar verändert werden.

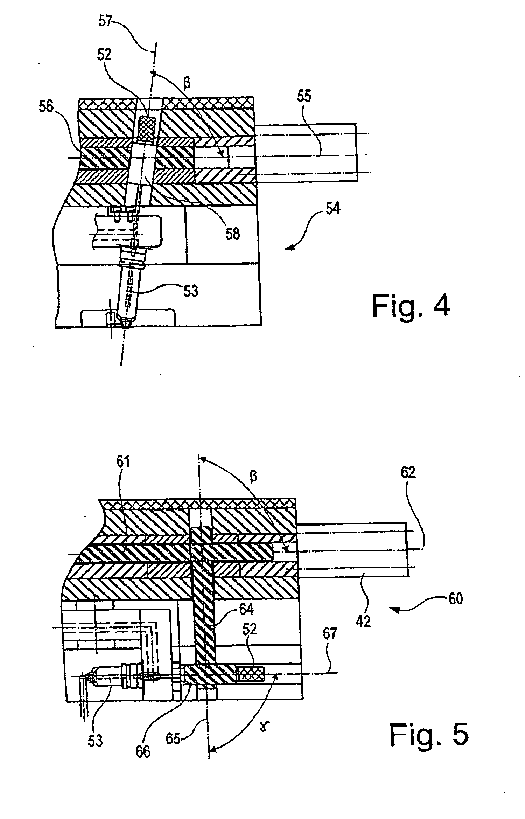

**Fig. 4** zeigt gemäß einer weiteren Ausführungsform eine Antriebsvorrichtung 54 mit einer Antriebsschubstange 56, einer Abtriebschubstange 58 und einer über einer Positioniereinrichtung 52 mit der Abriebsschubstange 58 verbundenen Düsennadel 53. Dabei beträgt der in **Fig. 4** dargestellte Kreuzungswinkel β zwischen einer Antriebsachse 55 und einer Abtriebsachse 57 etwa 60°.

Wie in **Fig. 5** an Hand einer weiteren Ausführungsform dargestellt, ist es auch möglich, eine mehrfache Achsenumlenkung an einer Antricbsvorrichtung 60 vorzusehen. Hierzu weißt die Antriebsvorrichtung 60 eine Antriebsschubstange 61 auf, die längs einer Antriebsachse 62 über einen Aktuator 42 translatorisch verschiebbar ist. Die Antriebsschubstange 61 wirkt mit einer ersten Abriebsschubstange 64 zusammen, deren translatorische Verschiebung längs einer ersten Abtriebsachse 65 erfolgt, die in einem Kreuzungswinkel β=90° gegenüber der Antriebsachse 62 angeordnet ist. Die erste Abtriebsschubstange 64 wirkt mit einer zweiten Abriebsschubstange 66 zusammen, die längs einer zweiten Abriebsachse 67 translatorisch verschiebbar über eine Positioniereinrichtung 52 mit einer Düsennadel 53 verbunden ist. Wie aus **Fig**. **5** ersichtlich, beträgt der Kreuzungswinkel γ zwischen der ersten Abriebsachse 65 und der zweiten Abriebsachse 67 ebenfalls 90°, so dass die zweite Abtriebsachse 67 parallel zur Antriebsachse 62 angeordnet ist.

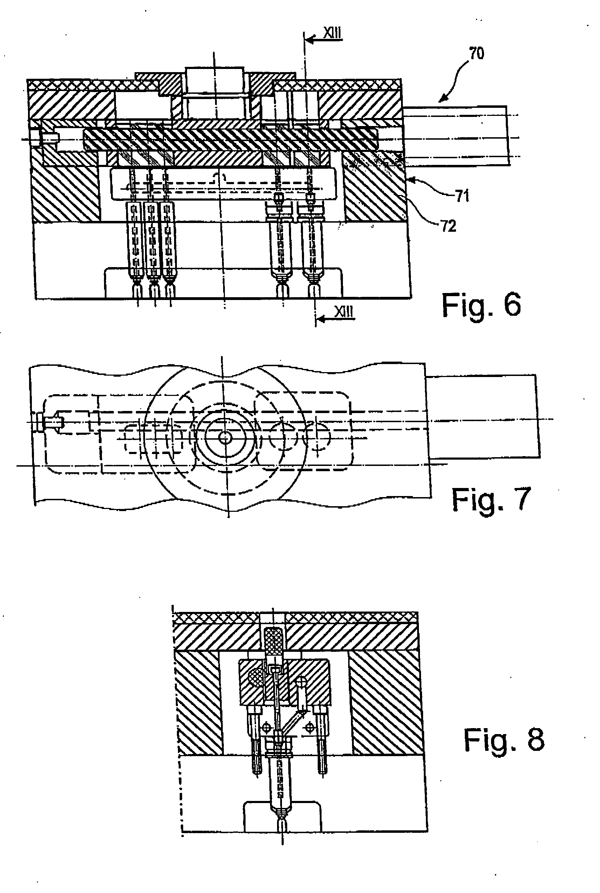

In den **Fig. 6** bis **8** ist eine Ausführungsform dargestellt, in der eine Antriebsvorrichtung 70 als Bestandteil bzw. Anbauteil eines Heißkanalverteilers 71 ausgebildet ist. Wie ein Vergleich der **Fig. 1** und **6** zeigt, ist es aufgrund der Integration der Antriebsvorrichtung 70 in das als Verteilerplatte 72 plattenförmig ausgebildete Gehäuse des Heißkanalverteilers 71 möglich, auf die bei dem in **Fig. 1** dargestellten Ausführungsbeispiel der Antriebsvorrichtung 10 benötigte, separat ausgebildete untere Deckplatte 38 zu verzichten, da deren Funktion durch die Verteilerplatte 72 des Heißkanalverteilers 71 übernommen wird.

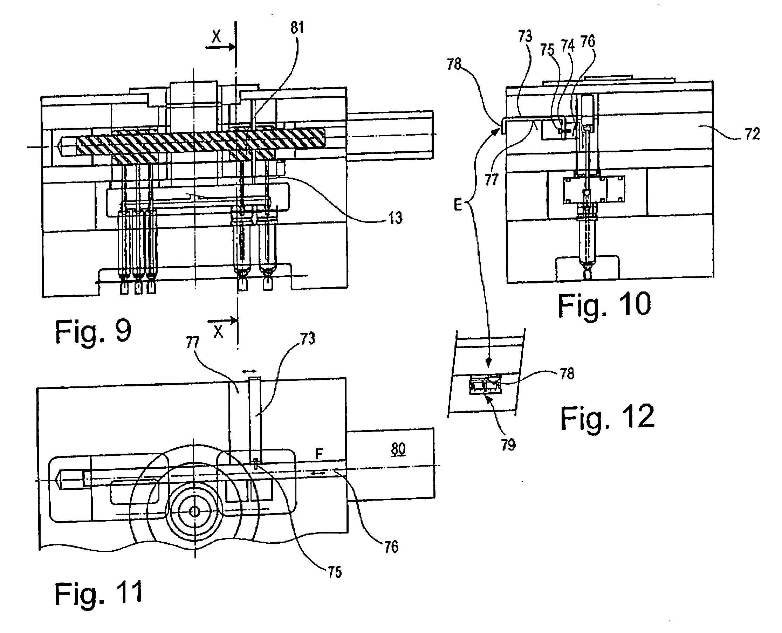

Das in den **Fig**. **9** bis **12** dargestellte Ausführungsbeispiel entspricht in seinem grundsätzlichen Aufbau im wesentlichen dem Ausführungsbeispiel nach den **Fig. 6** bis **8****.** Wie insbesondere aus der Fig. 10 ersichtlich ist, ist ein Zeiger 73 vorgesehen, der mit seinem ersten Ende 74 mittels einer Schraube 75 an der lediglich schematisch angedeuteten Antriebsschubstange 76 befestigt ist. In der Verteilerplatte 72 ist eine schlitzartigc nach außen offen Ausnchmung 77 vorgesehen (vgl. auch Fig. 11). Der Zeiger 73 ragt mit seinem zweiten Ende 78 durch die schlitzartige Ausnehmung nach außen, wobei das Ende 78 nach unten abgewinkelt ist. An der Außenseite der Verteilerplatte 72 ist eine Skala 79 vorgesehen, die als Einzelheit E in **Fig. 12** dargestellt ist.

Wird nun die Antriebschubstange 76 mittels des Antriebs 80 in Pfeilrichtung F verfahren, so bewegt sich der Zeiger um den gleichen Betrag, wobei das Ende 78 des Zeigers 73 dabei die Skala 79 überfährt. Dadurch wird auf einfache und zuverlässige Weise eine Information über die Position der Antriebsschubstange 76 und damit indirekt auch über die Position der weiteren Antricbsschubstangen 81 und damit der Düsennadelanordnung 13 erhalten.

## Patentansprüche

1. Vorrichtung zum Öffnen und Schließen von Einspritzdüsen in einem Spritzgusswerkzeug mit einem Stellgetriebe zur kraftschlüssigen Verbindung einer Antriebseinheit mit einer Düsennadelanordnung einer oder mehrerer Heißkanaldüsen des Spritzgusswerkzeugs, wobei die Antriebseinheit (42) außerhalb des Spritzgusswerkzeugs (14) angeordnet ist und das Stellgetriebe als Schubstangengetriebe mit einer ersten Antriebsschubstange (33, 56, 61, 76) zur kraftschlüssigen Verbindung mit der Antriebseinheit und zumindest einer weiteren Abtriebsschubstange (34, 35, 58, 64, 66) zur kraftschlüssigen Verbindung mit der Düsennadelanordnung (13) ausgebildet ist, wobei die Schubstangen (33, 34, 35, 56, 58, 61, 64, 66, 76) zumindest eine Gleitflächenpaarung (47, 48) aufweisen, derart, dass eine zu ihrer Längsachse parallele Bewegung der ersten Antriebsschubstange eine Bewegung der weiteren Abtriebsschubstange, die eine die Längsachse der ersten Schubstange kreuzende Richtung hat, bewirkt, wobei die Schubstangen (33, 56, 61, 34, 35, 58, 64, 66, 76) als Zahnstangen ausgebildet sind, darduch gekennzeichnet, dass die Düsennadelanordnung (13) vermittels einer Positioniereinrichtung (52), zur reproduzierbaren Veränderung der axialen Position der Düsennade gegenüber den weiteren Abtriebsschubstange (34, 35, 58, 66) mit der weiteren Abtriebsschubstange unmittelbar verbunden ist, und
die Schubstangen (33, 56, 61, 34, 35, 58, 64, 66, 76) in einer Führungskörperanordnung (30) mit zur Gleitführung der Schubstangcn ausgebildeten Führungsaufnahmen (44, 45, 46, 49, 50, 51) angeordnet sind, wobei die Führungskörperanordnung (30) zumindest ein Führungsstück (31, 32) aufweist, das sowohl zur Aufnahme der ersten Antriebsschubstange (33, 56, 61, 76) als auch zur Aufnahme der weiteren Abtriebsschubstange (34, 35, 58, 64, 66) dient.

2. Vorrichtung nach Anspruch 1,
**dadurch gekennzeichnet,**
**dass** die Führungskörperanordnung (30) in einer modularen Gehäuseeinheit (36) zur Verbindung mit dem Spritzgusswerkzeug (14) ausgebildet ist.

3. Vorrichtung nach Anspruch 2,
**dadurch gekennzeichnet,**
**dass** die Führungskörperanordnung (30) unter zwischenliegender Anordnung eines Heißkanalverteilers (21) mit dem Spritzgusswerkzeug (14) verbunden ist, wobei der Heißkanalverteiler zwischen der Führungskörpcranordnung und dem Spritzgusswerkzeug angeordnet ist.

4. Vorrichtung nach Anspruch 1,
**dadurch gekennzeichnet,**
**dass** die Führungskdrperanordnung (30) als Teil eines Heißkanalverteilers (71) ausgebildet ist.

5. Vorrichtung nach einem der vorangehenden Ansprüche,
**dadurch gekennzeichnet,**
**dass** die Führungskörperanordnung (30) in koaxialer Ausrichtung mit der Antriebsschubstange (33, 56, 61, 76) mit der Antriebseinheit (42) versehen ist.

6. Vorrichtung nach einem der vorangehenden Ansprüche,
**dadurch gekennzeichnet,**
**dass** Mittel zur Anzeige der Stellung der ersten Antriebsschubstange (33, 56, 61, 76), der weiteren Antriebsschubstange (34, 35, 58, 64, 66) und/oder der Düscnnadelanordnung (13) vorgesehen sind.

7. Vorrichtung nach Anspruch 6,
**dadurch gekennzeichnet,**
**dass** die Mittel einen Zeiger (73) aufweisen, der im Bereich seines ersten Endes (74) mit der ersten Antriebsschubstange (33, 56, 61, 76), der weiteren Antriebsschubstange (34, 35, 58, 64, 66) und/oder der Düsennadelanordnung (13) im wesentlichen starr verbunden ist und mit seinem zweiten Ende (78) mit einer Skala (79) zusammenwirkt, die im Bereich der Außenwand der Vorrichtung vorgesehen oder im Inneren der Vorrichtung derart angeordnet ist, dass sie durch eine Ausnehmung in der Außenwand der Vorrichtung ablesbar ist.

8. Vorrichtung nach Anspruch 6,
**dadurch gekennzeichnet,**
**dass** die Mittel einen Messwcrtgcbcr aufweisen, dessen Signal zur Ansteuerung einer elektrischen oder elektronischen Anzeigevorrichtung dient.

## Claims

1. A device for opening and closing injection nozzles in an injection molding tool with a control gear for the force-fitting connection of a drive unit to a nozzle needle arrangement of one or more hot runner nozzles of the injection molding tool, wherein the drive unit (42) is arranged outside of the injection molding tool (14) and the control gear is realized as a pushrod gear with a first drive pushrod (33, 56, 61, 76) for the force-fitting connection to the drive unit and at least one further output pushrod (34, 35, 58, 64, 66) for the force-fitting connection to the nozzle needle arrangement (13), wherein the pushrods (33, 34, 35, 56, 58, 61, 64, 66, 76) have at least one sliding surface pairing (47, 48) so that a motion of the first drive pushrod parallel to its longitudinal axis causes a motion of the further output pushrod which has a direction crossing the longitudinal axis of the first pushrod, wherein the pushrods (33, 56, 61, 34, 35, 58, 64, 66, 76) are realized as gear racks,
**characterized in that**
for the reproducible change of the axial position of the nozzle needle in relation to the further output pushrod (34, 35, 58, 66), the nozzle needle arrangement (13) is directly connected to the further output pushrod by means of a positioning device (52) and said pushrods (33, 56, 61, 34, 35, 58, 64, 66, 76) are arranged in a guiding body arrangement (30) with guiding mountings (44, 45, 46, 49, 50, 51) formed for the sliding guidance of the pushrods, wherein the guiding body arrangement (30) has at least one guiding portion (31, 32) which serves for mounting the first drive pushrod (33, 56, 61, 76) as well as for mounting the further output pushrod (34, 35, 58, 64, 66).

2. The device according to claim 1,
**characterized in that**
the guiding body arrangement (30) is formed in a modular housing unit (36) for the connection to the injection molding tool (14).

3. The device according to claim 2,
**characterized in that**
the guiding body arrangement (30) is connected to the injection molding tool (14), a hot runner manifold (21) being intermediately arranged, wherein the hot runner manifold is arranged between the guiding body arrangement and the injection molding tool.

4. The device according to claim 1,
**characterized in that**
the guiding body arrangement (30) is formed as a part of a hot runner manifold (71).

5. The device according to any of the preceding claims,
**characterized in that**
the guiding body arrangement (30) is provided with the drive unit (42) in coaxial orientation with the drive pushrod (33, 56, 61, 76).

6. The device according to any of the preceding claims,
**characterized in that**
means for displaying the position of the first drive pushrod (33, 56, 61, 76), of the further drive pushrod (34, 35, 58, 64, 66) and/or of the nozzle needle arrangement (13) are provided.

7. The device according to claim 6,
**characterized in that**
said means have a pointer (73) which is substantially rigidly connected in the area of its first end (74) to the first drive pushrod (33, 56, 61, 76), the further drive pushrod (34, 35, 58, 64, 66) and/or the needle nozzle arrangement (13) and interacts at its second end (78) with a scale (79) which is provided in the area of the outer wall of the device or on the inside of the device in such a manner that it can be read through a recess in the outer wall of the device.

8. The device according to claim 6,
**characterized in that**
the means comprise a measured value transmitter whose signal serves for controlling an electric or electronic display device.

## Revendications

1. Dispositif pour ouvrir et fermer des buses d'injection dans un outil de moulage par injection avec un mécanisme de réglage pour la connexion par liaison de force d'une unité d'entraînement à un dispositif d'aiguille de buse d'une ou plusieurs buses à canal chaud de l'outil de moulage par injection, dans lequel l'unité d'entraînement (42) est disposée en dehors de l'outil de moulage par injection (14) et le mécanisme de réglage est réalisé comme entraînement à barre de poussée avec une première barre de poussée d'entraînement (33, 56, 61, 76) pour la connexion par liaison de force à l'unité d'entraînement et au moins une autre barre de poussée de sortie (34, 35, 58, 64, 66) pour la connexion par liaison de force au dispositif d'aiguille de buse (13), dans lequel les barres de poussée (33, 34, 35, 56, 58, 61, 64, 66, 76) ont au moins une paire de surfaces de glissement (47, 48) de telle manière qu'un mouvement de la première barre de poussée d'entraînement parallèlement à son axe longitudinal provoque un mouvement de l'autre barre de poussée de sortie qui a une direction traversant l'axe longitudinal de la première barre de poussée, dans lequel les barres de poussée (33, 56, 61, 34, 35, 58, 64, 66, 76) sont réalisées comme arbres dentés,
**caractérisé en ce que**
le dispositif d'aiguille de buse (13) est directement connecté par un dispositif de positionnement (52) à l'autre barre de poussée de sortie pour l'altération reproductible de la position axiale de l'aiguille de buse par rapport à l'autre barre de poussée de sortie (34, 35, 58, 66) et les barres de poussée (33, 56, 61, 34, 35, 58, 64, 66, 76) sont arrangées dans un agencement de corps de guidage (30) avec des logements de guidage (44, 45, 46, 49, 50, 51) formés pour le guidage glissant des barres de poussée, dans lequel l'agencement de corps de guidage (30) a au moins une pièce de guidage (31, 32) qui sert au logement de la première barre de poussée d'entraînement (33, 56, 61, 76) et aussi au logement de l'autre barre de poussée de sortie (34, 35, 58, 64, 66).

2. Dispositif selon la revendication 1,
**caractérisé en ce que**
l'agencement de corps de guidage (30) est formé dans une unité de boîte modulaire (36) pour la connexion à l'outil de moulage par injection (14).

3. Dispositif selon la revendication 2,
**caractérisé en ce que**
l'agencement de corps de guidage (30) est connecté à l'outil de moulage par injection (14), un distributeur à canal chaud (21) étant disposé en position intermédiaire, dans lequel le distributeur à canal chaud est disposé entre l'agencement de corps de guidage et l'outil de moulage par injection.

4. Dispositif selon la revendication 1,
**caractérisé en ce que**
l'agencement de corps de guidage (30) est réalisé faisant partie du distributeur à canal chaud (71).

5. Dispositif selon l'une quelconque des revendications précédentes,
**caractérisé en ce que**
l'agencement de corps de guidage (30) est pourvu de l'unité d'entraînement (42) en alignement coaxial avec la barre de poussée d'entraînement (33, 56, 61, 76).

6. Dispositif selon l'une quelconque des revendications précédentes,
**caractérisé en ce que**
des moyens pour l'affichage de la position de la première barre de poussée d'entraînement (33, 56, 61, 76), de l'autre barre de poussée d'entraînement (34, 35, 58, 64, 66) et/ou de l'agencement d'aiguille de buse (13) sont prévus.

7. Dispositif selon la revendication 6,
**caractérisé en ce que**
les moyens ont un pointeur (73) qui est, dans la région de sa première extrémité (74), connecté substantiellement rigidement à la première barre de poussée d'entraînement (33, 56, 61, 76), à l'autre barre de poussée d'entraînement (34, 35, 58, 64, 66) et/ou à l'agencement d'aiguille de buse (13), et à sa deuxième extrémité (78) il coopère avec une échelle (79) qui est prévue dans la région du mur extérieur du dispositif ou à l'intérieur du dispositif de telle manière qu'elle puisse être lue à travers un évidement dans le mur extérieur du dispositif.

8. Dispositif selon la revendication 6,
**caractérisé en ce que**
les moyens ont un transmetteur de valeur mesurée dont le signal sert à commander un dispositif d'affichage électrique ou électronique.
